# EUROPEAN PATENT APPLICATION

(11) **EP 3 385 025 A1**
(43) Date of publication of application: **10.10.2018**
(21) Application number: 17165338.9
(22) Date of filing: 06.04.2017
(51) Int. Cl.: B23K 20/12

(54) **APPARATUS FOR FRICTION STIR WELDING WITH A CLEARANCE COVER LOCATED BETWEEN THE SHOULDER TOOL AND THE PIN TOOL**

(71) Applicant: Siemens Aktiengesellschaft, 80333 München (DE)
(72) Inventor: NAIR, Sudev, 560078 Bangalore (IN); PERUMAL, Venkateswaran, 560100 Bangalore (IN)
(74) Representative: Patentanwaltskanzlei WILHELM & BECK

(57) **Abstract**

A friction stir welding (FSW) apparatus (200) is disclosed. The FSW apparatus comprises a pin tool (202) with a work-piece contact end and a center axis extending through a length of pin tool (202). The FSW apparatus (200) also includes a pin drive mechanism capable of rotating the pin tool (202). Further, the FSW apparatus (200) comprises a shoulder tool (208) provided around the pin tool (202), having a pin-side end and separated from the pin tool (202) by a clearance. The FSW apparatus (2009 further comprises a clearance cover arranged in the clearance between the shoulder tool (208) and the pin tool (202), extending from the shoulder tool (208) to abut the pin tool (202).

## Description

The present invention relates to friction stir welding apparatus with rotating pin and shoulder mechanism.

Friction stir welding (FSW) apparatus is used joining work-pieces of materials such as metals. The FSW apparatus has a shoulder tool and pin tool extending towards the work-pieces. During the operation of the FSW apparatus, the pin tool is brought in contact with the material of both the work-pieces. The rotational movement of the pin tool in the materials produces a large amount of frictional heating the joint between the work-pieces. This heat softens the material of the work-pieces in the vicinity of the pin tool and results in mingling of material from the two work-pieces to form a weld.

Such an apparatus for friction stir welding (FSW) is already disclosed in US 8662372 B2. The FSW apparatus disclosed therein has a spindle head having coaxial spindle shafts driven by stacked, coaxial motors contained within a spindle housing. The coaxial spindle shafts are connected to the shoulder tool and the pin tool to achieve dual direction rotation. Since, the stacked coaxial motors are built-in motors the pin tool and shoulder tool are not easily maintainable. For example, in the event of failure of the pin tool, the shoulder tool or coaxial motors, the time required to replace the tools and motors may be significant. To reduce the time spent in repairing FSW apparatus, spare spindle and tools may be required. This in turn may increase the cost of such a FSW apparatus.

Further, to ensure smooth movement of the pin tool and the shoulder tool, clearance between the pin tool and shoulder tool must be provided. However, during the operation of the FSW apparatus plasticized material may enter the clearance. When the operation is complete, the plasticized material in the clearance cools and solidifies. This results in locking of the shoulder tool and the pin tool, which may in turn lead to destruction of the pin tool and the FSW apparatus.

Therefore, it is an object of the present invention to provide a friction stir welding apparatus of the aforementioned kind that precludes the obstruction of free movement of the pin tool and shoulder tool.

The invention achieves this object in that the friction stir welding apparatus is designed with a clearance cover arranged in the clearance between the shoulder tool and the pin tool, extending from the shoulder tool to abut the pin tool. The clearance cover is capable of preventing entry of plasticized material in the clearance and thereby ensures free movement of the pin tool and the shoulder tool.

According to the present invention, a friction stir welding (FSW) apparatus comprising a pin tool, a pin drive mechanism, a shoulder tool and a clearance cover is provided. The pin tool of the FSW apparatus has a length with a work-piece contact end and a spindle end. As used herein, "work-piece contact end" relates to an end of the pin tool that is in contact with the work-pieces that are to be welded. The pin tool is plunged in a joint between the work-pieces to create the weld. The pin tool also includes a center axis extending through a length of pin tool. As used herein the "center axis" is an imaginary line that extends though the geometric center of the pin tool along its length. In certain embodiments, the pin tool includes a pin tool holder separable or fused with the pin tool. The pin tool holder operatively connects the pin tool with a spindle housing of the FSW apparatus to facilitate rotation of the pin tool. The rotation of the pin tool is driven by a pin drive mechanism that is capable of rotating the pin tool via a spindle.

The shoulder tool of the FSW apparatus is provided around the pin tool such that the shoulder tool is separated from the pin tool by a clearance. For example, the pin tool is a smaller concentric tool and the shoulder tool is a larger concentric tool around the pin tool. The concentricity of the pin tool in relation to the shoulder tool is important to be maintained to ensure efficient functioning of the clearance cover. Additionally, to ensure efficient functioning of the clearance cover, the FSW apparatus is operated at suitable parameters to ensure that burr does not get trapped between the clearance cover and the pin tool.

The shoulder tool has a pin-side end that is towards the pin tool. The pin-side end of the shoulder tool is maintained on the surface of the joint between the work-pieces to generate frictional heat and forging pressure. The clearance between the shoulder tool and pin tool tends to get jammed due to entry of plasticized material in the clearance. This problem is advantageously overcome by the clearance cover arranged in the clearance between the shoulder tool and the pin tool, extending from the shoulder tool to abut the pin tool.

According to an embodiment of the present invention, the pin drive mechanism includes a dual-directional drum that detachably houses the pin tool. The pin tool is advantageously detachable and replaceable in case of breakage or damage. In an embodiment the dual-directional drum also houses the shoulder tool. In this embodiment, the shoulder tool is can be removed and regrind to avoid underuse or overuse of the shoulder tool.

The apparatus further comprises a spindle housing that is coupled to the pin tool and the dual-directional drum. In the current embodiment the spindle housing and the pin tool are detachable from each other. The spindle housing includes a spindle which is connected to a pin motor. The pin motor is capable of rotating the pin tool by rotating the spindle. In an embodiment, the pin tool is guided onto the spindle and fastened using screws to the spindle. In another embodiment, the pin tool is guided onto the spindle by means of contact bearings with angular contact are provided on the spindle. For example, the contact bearings have a contact angle of 25 degrees and are provided on a spindle with taper of ISO 40. The rotational movement of the pin tool at the joint between the work-pieces generates a large amount of frictional heating of both the pin tool and thereby causes the weld to take place.

According to another embodiment, the spindle housing comprises the spindle having a stationary spindle component and a rotating spindle component. The stationary spindle component engages the contact bearings that enable the pin tool to be guided on to the spindle. Further, the spindle housing includes a spindle holder to couple the pin tool to the spindle.

According to yet another embodiment of the present invention, the spindle holder includes an outer casing connected to the stationary spindle component and a shoulder housing comprising the shoulder tool. The outer casing engages the shoulder housing by means of shoulder contact bearings. Further, the spindle holder is provided with an inner through-hole capable of receiving a fluid to cool the apparatus. The inner through-hole for the cooling fluid is advantageous as it acts as a spindle cooling mechanism that is capable of increasing the life of the pin tool.

According to an embodiment of the present invention, the apparatus includes the shoulder housing comprising the shoulder tool and a shoulder motor capable of rotating the shoulder tool. The shoulder motor is coupled to a shoulder transmission shaft to transmit the rotational movement from the shoulder motor to the shoulder tool in the shoulder housing.

According to another embodiment of the present invention, the shoulder housing includes a gear-train connected to the shoulder transmission shaft. The gear-train is capable of transmitting rotational movement from the shoulder transmission shaft to the shoulder tool. The shoulder housing also includes a clutch-brake assembly connected to the gear-train. The clutch-brake assembly is preferably an electromagnetic clutch-brake assembly. The clutch-brake assembly is advantageous as the same is capable changing speed and direction of the rotational movement transmitted by the gear-train.

In a preferred embodiment of the present invention, the clearance cover includes at least one plate arranged to abut the pin tool at a contact region to prevent the entry of plasticized material in the clearance. The clearance cover is also provided with a ceramic ring inserted at the contact region between the pin tool and the at least one plate. The ceramic ring is advantageous as it minimizes the wear caused at the contact region by the at least one plate. Further, the ceramic ring is used to minimize the heat conduction at the contact region. To ensure that the ceramic ring is capable of tolerating elevated temperatures, finite element analysis is performed to analyze the behavior pattern of the ceramic ring at high temperatures.

In yet another preferred embodiment of the present invention, the at least one plate is an inverted spring plate. The inverted spring plate is attached to a shoulder housing that includes the shoulder tool. The inverted spring plate is fastened to the shoulder housing such that it is proximate to the joint between the work-pieces. The inverted spring plate is attached by means of a clamping mechanism such as screws. The inverted spring plate is capable of bearing significant force exerted by the entry of the plasticized material during the operation of the FSW apparatus. Further, the force is also distributed throughout the length of the inverted spring plate and thereby having higher durability. Furthermore, the inverted spring plate is advantageously configured to operate across a large range of rotational speeds. This is achieved by performing finite element analysis on the inverted spring plate. The finite element analysis is used to determine inertial effects that cause deflection of the inverted spring plate. Accordingly, the inverted spring plate is designed to overcome deflections based on the finite element analysis.

For example, the inverted spring plate is a leaf spring fastened onto the shoulder housing by means of screws. In another embodiment, multiple inverted spring plates are stacked to ensure that plasticized material does not enter the clearance between the shoulder tool and the pin tool.

In an embodiment of the present invention, the shoulder tool and the pin tool are advanceable and retractable in the center axis of the pin tool. The shoulder tool and the pin tool may be advanced into the joint between the work-pieces during the welding operation and retracted after the welding is completed. In some embodiments, the shoulder tool may be fastened to the shoulder housing such that only the pin tool is advanceable and retractable in the center axis. This is achieved by disengaging a clutch of the clutch-brake assembly from the shoulder tool and fastening the shoulder tool to the shoulder housing by means of a spring loaded plunger. This configuration is preferable when the joint between the work-pieces are at an angle and only the pin tool is advanced to the joint for welding.

In another embodiment of the present invention, the pin tool is capable of rotating independently from the shoulder tool. For example, the pin tool can be controlled to rotate at the same or different rotational speed and in the same or different directions of rotation. In yet another embodiment, the shoulder tool and the pin tool are capable of rotating independently from each other.

The FSW apparatus is advantageous as overheating of the work-piece is avoided. As the pin tool and the shoulder tool rotation speeds can be varied, peripheral velocity at an edge of the shoulder tool can be maintained at peripheral velocity at an edge of the pin tool. This ensures that minimal defects along a weld surface are formed. Therefore, the FSW apparatus as disclosed is suitable for fabricating rotor coils and parallel rings in generators.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
Figure 1 is a schematic representation of a pin tool and shoulder tool with a clearance cover in accordance with the present invention;
Figure 2 is a cross section of a friction stir welding apparatus in accordance with the present invention; and
Figure 3 is a cross section of a friction stir welding apparatus in accordance with the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

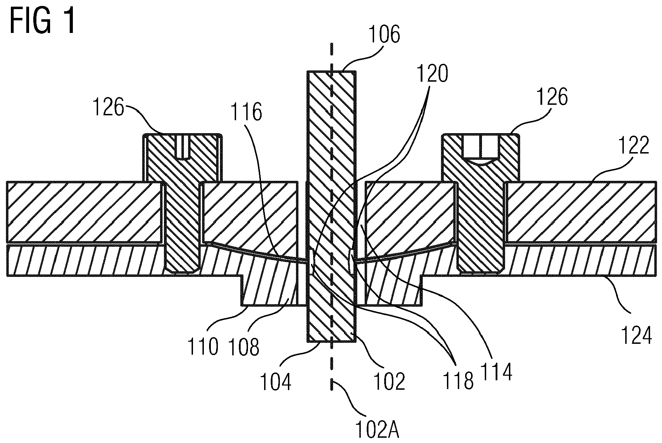

Figure 1 is a schematic representation of a pin tool 102 and shoulder tool 108 with a clearance cover 116. The pin tool 102, shoulder tool 108 and the clearance cover 116 are part of a friction stir welding (FSW) apparatus (not shown in Figure 1). The pin tool 102 of the FSW apparatus has a length with a work-piece contact end 104 and a spindle end 106. The work-piece contact end 104 comes in contact with the work-pieces (not shown in Figure 1) that are to be welded. The pin tool 102 also includes a center axis 102A extending through the length of pin tool 102.

The shoulder tool 108 of the FSW apparatus is provided around the pin tool 102 such that the shoulder tool 108 is separated from the pin tool 102 by a clearance 114. The shoulder tool 108 has a pin-side end 110 that is towards the pin tool 102.

The clearance 114 between the shoulder tool 108 and pin tool 102 has the clearance cover 116 arranged in the clearance 114 in a manner to extend from the shoulder tool 108 to abut the pin tool 102. As shown in the figure, the clearance cover 116 is an inverted spring plate 116 arranged to abut the pin tool 102 at a contact region 118 to prevent the entry of plasticized material in the clearance 114. The clearance cover 116 is also provided with a ceramic ring 120 inserted at the contact region 118 between the pin tool 102 and the inverted spring plate 116. The ceramic ring 120 is advantageous as it minimizes the wear caused at the contact region 118 by the inverted spring plate 116. Further, the ceramic ring 120 is used to minimize the heat conduction at the contact region 118.

The inverted spring plate 116 is attached to a shoulder housing that includes the shoulder tool 108. The shoulder housing also includes a top plate 122 and a bottom plate 124. The inverted spring plate 116 is provided in between the top plate 122 and the bottom plate 124. The inverted spring plate 116 is fastened by means of screws 126. The inverted spring plate 116 ensures that the clearance 114 between the shoulder tool 108 and the pin tool 102 does not get jammed due to the entry of plasticized material.

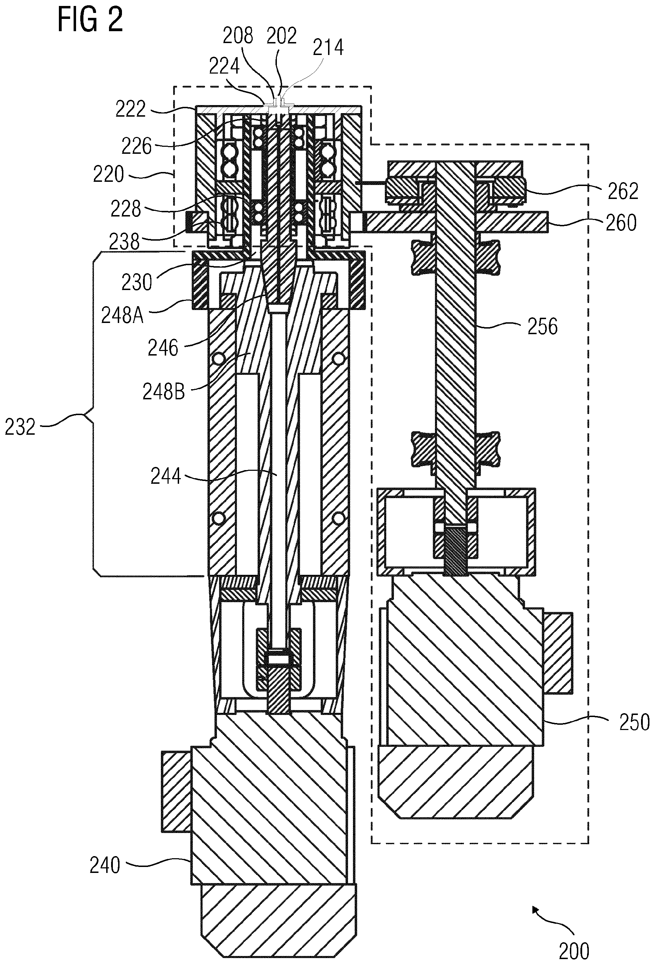

Figure 2 is a cross section of a friction stir welding (FSW) apparatus 200 in accordance with the present invention. The FSW apparatus 200 includes the pin tool 202 and the shoulder tool 208 separated from the pin tool 202. The clearance cover (not shown in the Figure 2) of the present invention is provided in the clearance 214. As explained in Figure 1 the clearance cover is an inverted spring plate arranged to abut the pin tool 202 at a contact region to prevent the entry of plasticized material in the clearance 214. The inverted spring plate provided in between the top plate 222 and the bottom plate 224. The inverted spring plate is fastened by means of screws (not shown in Figure 2). The inverted spring plate ensures that the clearance 214 between the shoulder tool 208 and the pin tool 202 does not get jammed due to the entry of plasticized material. Additionally, the inverted spring plate is capable of bearing significant force due to the entry of plasticized material during the operation of the FSW apparatus 200.

The pin tool 202 includes a pin tool holder separable or fused with the pin tool 202. The pin tool holder 226 operatively connects the pin tool 202 with a spindle housing 232 of the FSW apparatus to facilitate rotation of the pin tool 202. The rotation of the pin tool 202 is driven by a pin motor 240 that is capable of rotating the pin tool 202 via a spindle 244.

The FSW apparatus 200 includes a dual-directional drum 228 that detachably houses the pin tool 202. The spindle housing 232 extends to the dual-directional drum 228. The spindle housing 232 includes the spindle 244 which is connected to a pin motor 240. The pin motor 240 is capable of rotating the pin tool 202 by rotating the spindle 244. The spindle 244 has a stationary spindle component 248A and a rotating spindle component 248B. The stationary spindle 248A component engages contact bearings that enable the pin tool 202 to be guided on to the spindle 244.

Further, the spindle housing 232 includes a spindle holder 246 to couple the pin tool 202 to the spindle 244. The spindle holder 246 includes an outer casing 230 connected to the stationary spindle component 248A. The outer casing 230 engages the shoulder housing 220 by means of shoulder contact bearings 238. Further, the spindle holder is provided with an inner through-hole (not shown in figure) capable of receiving a fluid to cool the FSW apparatus 200.

The shoulder housing 220 includes FSW apparatus 200 also includes a shoulder motor 250 capable of rotating the shoulder tool 208. The shoulder motor 250 is coupled to a shoulder transmission shaft 256 to transmit the rotational movement from the shoulder motor 250 to the shoulder tool 208.

The shoulder housing 220 further includes a gear-train 260 connected to the shoulder transmission shaft 256. The gear-train 260 is capable of transmitting rotational movement from the shoulder transmission shaft 256 to the shoulder tool 208. The shoulder housing 220 also includes a clutch-brake assembly 262 connected to the gear-train 260. The clutch-brake assembly 262 is advantageous as the same is capable changing speed and direction of the rotational movement transmitted by the gear-train 260. Accordingly, the shoulder tool 208 of the FSW apparatus 200 can be rotated independently of the pin tool 202 at the same or different rotational speed and in the same or different directions of rotation.

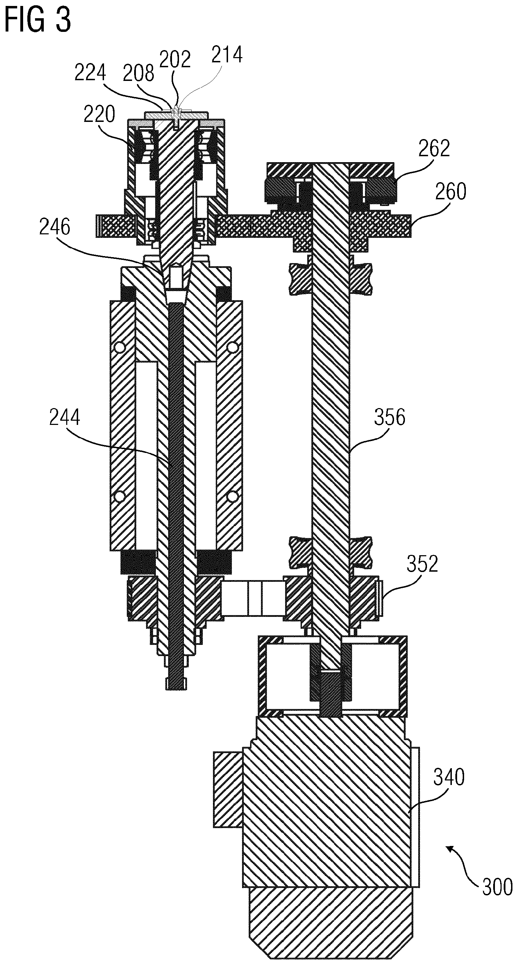

Figure 3 is a cross section of a FSW apparatus 300 in accordance with the present invention. The FSW apparatus 300 varies from the FSW apparatus 200 as it includes a single motor 340 used to rotate only the pin tool 202. The single motor 340 is also referred to as pin motor 340. The pin motor 340 is coupled to a spindle coupler 352 that couples the pin motor to the spindle 244. The rotational movement is transmitted from the pin motor 340 to the spindle 244 via the spindle coupler 352 and the rotational movement is then transmitted to the pin tool 202 by means of the spindle holder 246.

The FSW apparatus 300 also includes a transmission shaft 356 coupled to the pin motor 340. As shown in the figure, the transmission shaft 356 is also connected to the gear-train 260, which is in turn connected to the clutch-brake assembly 262. The clutch-brake assembly 262 is advantageous as the same is capable changing speed and direction of the rotational movement of the spindle 244. Accordingly, the pin tool 202 is capable of rotating at the same or different rotational speed and in the same or different directions of rotation.

The shoulder tool 208 in the FSW apparatus 300 is fused to the shoulder housing 220. This configuration is preferable when the joint between the work-pieces are at an angle and only the pin tool 202 is suitable for welding. The clearance cover (not shown in the Figure 3) of the present invention is provided in the clearance 214. As explained in Figure 1 the clearance cover is an inverted spring plate arranged to abut the pin tool to prevent the entry of plasticized material in the clearance 214. The inverted spring plate provided in between the top plate 222 and the bottom plate 224. The inverted spring plate ensures that the clearance 214 between the shoulder tool 208 and the pin tool 202 does not get jammed due to the entry of plasticized material.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

## Claims

1. A friction stir welding apparatus (200, 300), comprising:
a pin tool (102, 202) with a work-piece contact end (104) and a center axis (102A) extending through a length of pin tool (102, 202);
a pin drive mechanism capable of rotating the pin tool (102, 202); and
a shoulder tool (108, 208) provided around the pin tool (102, 202), having a pin-side end (110) and separated from the pin tool (102, 202) by a clearance (114), the friction stir welding apparatus **characterized by**:
a clearance cover (116) arranged in the clearance (114) between the shoulder tool (108, 208) and the pin tool (102, 202) extending from the shoulder tool (108, 208) to abut the pin tool (102, 202).

2. The apparatus as claimed in claim 1, wherein the pin drive mechanism comprises:
a dual-directional drum (228) detachably housing the pin tool (102, 202);
a spindle housing (232) coupled to the pin tool (102, 202), wherein the spindle housing (232) and the pin tool (102, 202) are detachable from each other; and
a pin motor (240) capable of rotating the pin tool (102, 202).

3. The apparatus as claimed in claim 2, wherein the spindle housing (232) comprises:
a spindle (244) rotatable by the pin motor (240), having a stationary spindle component (248A) and a rotating spindle component (248B); and
a spindle holder (246) coupling the pin tool and the spindle.

4. The apparatus as claimed in claim 3, wherein the spindle holder (246) comprises:
an outer casing (230) connected to the stationary spindle component and a shoulder housing (220) comprising the shoulder tool (108, 208); and
an inner through-hole capable of receiving a fluid to cool the apparatus.

5. The apparatus as claimed in claim 1, comprising:
a shoulder housing (220) comprising the shoulder tool;
a shoulder motor (250) capable of rotating the shoulder tool; and
a shoulder transmission shaft (256) connected to the shoulder motor (108, 208) and the shoulder housing (220).

6. The apparatus as claimed in claim 5, the shoulder housing further comprising:
a gear-train (260) connected to the shoulder transmission shaft (256), capable of transmitting rotational movement from the shoulder transmission shaft (256) to the shoulder tool (108, 208); and
a clutch-brake assembly (262) connected to the gear-train (260), capable changing speed and direction of the rotational movement transmitted by the gear-train.

7. The apparatus as claimed in claim 1, wherein the clearance cover (116) comprises:
at least one plate arranged to abut the pin tool (102, 202) at a contact region (118) to prevent the entry of plasticized material in the clearance; and
a ceramic ring (120) inserted at the contact region between the pin tool (102, 202)and the at least one plate.

8. The apparatus as claimed in claim 7, wherein the at least one plate is an inverted spring plate disposed on a shoulder housing (220) comprising the shoulder tool (108, 208) by means of a clamping mechanism (126).

9. The apparatus as claimed in claim 1, wherein the shoulder tool (108, 208) and the pin tool (102, 202) are advanceable and retractable in the center axis (102A) of the pin tool.

10. The apparatus as claimed in claim 1, wherein the shoulder tool (108, 208) is capable of rotating independently from the pin tool (102, 202).

11. The apparatus as claimed in claim 1, wherein the pin tool (102, 202) is capable of rotating independently from the shoulder tool (108, 208).
